(19) Europäisches Patentamt
European Patent Office
Office européen des brevets

(11) Publication number: 0 128 588 B1

(12) # EUROPEAN PATENT SPECIFICATION

(45) Date of publication of patent specification: 07.09.88

(51) Int. Cl.$^4$: H 01 B 3/56, H 01 H 33/22

(21) Application number: 84106758.0

(22) Date of filing: 13.06.84

(54) **Gas-insulated electric device and insulating gas.**

(30) Priority: 14.06.83 JP 108177/83

(43) Date of publication of application: 19.12.84 Bulletin 84/51

(45) Publication of the grant of the patent: 07.09.88 Bulletin 88/36

(84) Designated Contracting States: CH DE FR GB LI SE

(56) References cited:
FR-A-1 265 731
US-A-3 506 774

(73) Proprietor: MITSUBISHI DENKI KABUSHIKI KAISHA
2-3, Marunouchi 2-chome Chiyoda-ku
Tokyo 100 (JP)

(72) Inventor: Hirooka, Koichi c/o Itami Works of Mitsubishi
Denki K.K. 1-1, Tsukaguchi Hon-machi 8-chome
City of Amagasaki Hyogo Prefecture (JP)
Inventor: Matsuda, Setsuyuki c/o Itami Works of Mitsubishi
Denki K.K. 1-1, Tsukaguchi Hon-machi 8-chome
City of Amagasaki Hyogo Prefecture (JP)
Inventor: Arahata, Yoshikuni c/o Itami Works of Mitsubishi
Denki K.K. 1-1, Tsukaguchi Hon-machi 8-chome
City of Amagasaki Hyogo Prefecture (JP)

(74) Representative: Vossius & Partner
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 128 588 B1

**Description**

The present invention relates to a gas-insulated electric device and to an insulating gas for use in such device.

Recently, in order to cope with land or environmental problems, gas-insulated electric devices, especially gas-insulated switching devices, have become widely used. A conventional electric device of this type has a structure like that of the device shown in Figure 1, and comprises a vessel 1 in which a gas 2 of high insulating strength is sealed and in which a high voltage conductor 3 is supported by a solid insulator 4. $SF_6$ (sulfur hexafluoride gas) gas is frequently used as the insulating gas.

A reduction of the size of this type of conventional device and an increase in the performance thereof will be advantageously attained if an insulating gas having better insulating characteristics than $SF_6$ gas can be applied.

FR—A—1 265 731 discloses the use of perfluoroalkylenitriles as dielectric gases. It also considers the use of a mixture of perfluoroallylenitriles with other dielectric gases, like $SF_6$, because of economic advantages, higher pressure and a modification of the boiling point, but not in order to enhance the insulating characteristics.

It is an object of the present invention to provide a gas-insulated electric device in which the insulating characteristics are improved and the breakdown voltage is increased, thereby reducing the size and increasing the performance of the device as compared with conventional devices.

This object is achieved by the gas-insulated electric device according to Claim 1.

The present invention will now be described in detail in connection with the drawings in which

Figure 1 is a longitudinal sectional view illustrating a conventional gas-insulated electric device,

Figure 2a is a diagram illustrating the insulating characteristics of $C_2F_5CN$ and $SF_6$ gases. Figure 2b shows the disposition of electrodes used in the breakdown voltage test performed to obtain the data of Figure 2a.

Figure 3 is a diagram showing the vapor pressures of $SF_6$ and $C_2F_5CN$ gases.

Figure 4 is a diagram illustrating the AC breakdown voltage ($V_m$) and sealing pressure ($P_T$) of gaseous mixtures of $SF_6$ with $C_2F_5CN$.

Figure 5 is a diagram illustrating the relation between the mole fraction of $C_2F_5CN$ and the breakdown voltage of gas mixtures of $C_2F_5CN$ and $SF_6$ for four different pressures.

$C_2F_5CN$ (compound name: pentafluoropropionitrile) used as insulating gas for carrying out the present invention is commercially available as industrial chemical grade reagent (purity: 99.8%).

The results of measurements of the insulating characteristics of the insulating gases $SF_6$ and $C_2F_5CN$ are shown in Figure 2a. Each insulating gas was sealed in an acrylic resin vessel having a capacity of 2 liters under atmospheric pressure at 20°C, and the AC breakdown voltage was measured using a round-edged horiziontally-disposed electrode 5 having a width of 80 mm and a perpendicular electrode 6 disposed centrally to and spaced 2 mm from the horizontal electrode 5, as shown in Figure 2b. It is seen that the ratios of the breakdown voltages of $C_2F_5CN$ to the breakdown voltage of $SF_6$ is greater than 1, namely 1.8.

Since the liquefaction of the insulating gas should be avoided, the vapor pressure characteristics of each insulating gas were measured in the following manner in order to clarify the vapor-liquefaction characteristics.

Bombs filled with each insulating gas kept in a liquid state were placed in a thermostatic chamber and a pressure gauge was connected to each bomb. The vapor pressure in each bomb was measured at various temperatures. The results are shown in Figure 3. It was found that there is a linear relationship between the vapor pressure and the reciprocal of the temperature employed expressed as an absolute temperature. This relationship conforms to the Clausius-Clapeyron formula.

The AC breakdown voltage of $C_2F_5CN$ or a mixture of $C_2F_5CN$ with $SF_6$ gas under conditions not causing liquefaction will now be described. For a given sealing pressure ($P_T$) of a gas mixture comprising $SF_6$ and $C_2F_5CN$, the relation between the sealing pressure ($P_T$) and the mole fraction (k) of $SF_6$ in the gas mixture is as follows:

$$P_T=P_{FC} \text{ (when } P_T \leqq P_{FC})$$

$$P_T=P_{FC}+P_{SF_6} \text{ (when } P_T>P_{FC})$$

$$k=\frac{P_{SF_6}}{P_T}$$

wherein $P_T$ stands for the sealing pressure (absolute pressure, 20°C) at which the gas mixture is sealed in a device, $p_{FC}$ stands for the partial pressure (absolute pressure) of $C_2F_5CN$ at 20°C (which is determined from Figure 3 according to the lower limit of the temperature used in the device; examples at temperatures of −20, −10, 0, 10 and 20°C are shown in Table 1), $P_{FC}$ stands for the saturated vapor pressure (absolute pressure) of the same gas at 20°C, $p_{SF_6}$ stands for the partial pressure (absolute pressure) of $SF_6$ gas when sealed at 20°C, and k stands for the mole fraction of $SF_6$ gas in the gas mixture.

It it is assumed that the addition of $C_2F_5CN$ to $SF_6$ has a linear compositional effect on breakdown voltage then the AC breakdown voltage ($V_m$) of the gas mixture is given by the following formula:

$$V_m=V_{SF_6}[k+(1-k)R_{FC/SF_6}]$$

wherein $V_m$ stands for the AC breakdown voltage ($kV_{rms}$) of the gas mixture, $V_{SF_6}$ stands for the AC breakdown voltage ($kV_{rms}$) of $SF_6$ gas, and $R_{FC/SF_6}$ stands for the ratio of the breakdown voltage of $C_2F_5CN$ to that of $SF_6$ gas (see Figure 2a).

In Figure 4, the relation between $V_m$ and $P_T$ is plotted for the case when the lower limit of the temperature used in the device is −10°C using the electrode system shown in Figure 2b. Similar diagrams can be drawn for other lower limit temperatures such as −20, 0, 10 and 20°C. These diagrams can be obtained when the characteristics shown in Figures 2a and 3 are known.

TABLE 1

| State | Sample $C_2F_5CN$ | $SF_6$ |
|---|---|---|
| *vapor pressure at −20°C | 1.92 (194) | 7.16 (725) |
| pressure at 20°C when sealed at −20°C | 2.22 (225) | 8.23 (834) |
| vapor pressure at −10°C | 2.77 (281) | 9.80 (993) |
| pressure at 20°C when sealed −10°C | 3.09 (313) | 10.92 (1106) |
| vapor pressure at 0°C | 3.96 (401) | 13.04 (1321) |
| pressure at 20°C when sealed at 0°C | 4.25 (431) | 14.00 (1418) |
| vapor pressure at 10°C | 5.45 (552) | 16.6 (1682) |
| pressure at 20°C when sealed at 10°C | 5.64 (571) | 17.2 (1742) |
| vapor pressure at 20°C | 7.30 (739) | 21.7 (2198) |
| pressure at 20°C when sealed at 20°C | 7.30 (739) | 21.7 (2198) |

*All pressures given in absolute atmospheres, atm Values in parentheses given in kPa

Table 2 shows the mole fraction (k) of $SF_6$ and the ratio of breakdown voltages ($V_m/V_{SF_6}$) for gas mixtures of $SF_6$ and $C_2F_5CN$ having various lower limit temperatures in a gas-insulated switch with a sealing pressure of 4 atm (405 kPa) at 20°C.

TABLE 2

| Lower limit temperature | Insulating gas $C_2F_5CN$ | | | |
|---|---|---|---|---|
| | $P_{FC}$ | $P_{SF_6}$ | k | $V_m/V_{SF_6}$ |
| −20°C | 2.22 (225) | 1.78 (180) | 0.45 | 1.4 |
| −10°C | 3.09 (313) | 0.91 (92) | 0.23 | 1.6 |
| 0°C | 4.00 (405) | 0 | 0 | 1.8 |
| 10°C | 4.00 (405) | 0 | 0 | 1.8 |
| 20°C | 4.00 (405) | 0 | 0 | 1.8 |

All pressures are absolute pressures measured in atmospheres, atm
Values in parentheses are given in kPa

Referring to Table 2, when the lower limit temperature is 0°C, the ratio of the breakdown voltage of $C_2F_5CN$ to that of $SF_6$ gas is 1.8. Supposing that the absolute sealing pressure is 1.5 atm (152 kPa) for a gas transformer, a cubicle GIS (gas-insulated switch gear), or a gas bushing-type transformer, even if the lower limit temperature is −20°C, the ratio of the breakdown voltage of $C_2F_5CN$ to $SF_6$ gas is 1.8. Since the insulating characteristics are excellent, the size of the device can be diminished.

If this insulating gas is used to fill a conventional $SF_6$ gas-insulated device under the same pressure as adopted for $SF_6$ gas, the rated voltage is 1.8 times the conventional rated voltage. In the $SF_6$ gas-insulated device, the rated voltage can be increased by increasing the pressure of the $SF_6$ gas. However, in order to increase the $SF_6$ gas pressure, the specifications of the device must be changed; for example, the thickness of the sealed vessel must be increased, which results in an increase in the weight and price of the device. On the other hand, if the insulating gas of the present invention is used, the rated voltage is increased under the same gas pressure, and therefore, the rated voltage of the existing facilities can be increased without any modification of the device.

Ordinarily, in the insulation design of a gas-insulated device, the lightning impulse withstand voltage of the device is the most important parameter. The lightning impulse withstand voltages of devices of 500 kV, 275 kV, and 154 kV are 1550 kV, 1050 kV, and 750 kV, respectively. The ratio of the lightning impulse voltage of a device of 500 kV to that of a device of 275 kV is 1.47, and the ratio of the impulse lightning voltage of a device of 275 kV to a device of 154 kV is 1.4. Accordingly, if a gas mixture comprising 45% of $SF_6$ and 55% of $C_2F_5CN$ is sealed in a gas-insulated device of 154 kV designed for $SF_6$ gas, since the insulating characteristic are increased 1.4 times as shown in Table 2, the device corresponds to a device rated at 275 kV. Furthermore, this device can be used in a place where the temperature is lowered to −20°C. When a gas mixture comprising 37% of $SF_6$ and 63% of $C_2F_5CN$ is used, the device can be used in a place where the temperature is lowered to about −15°C and the voltage resistance is 1.5 times as high as that of a device filled with $SF_6$. Accordingly, a device rated at 275 kV when filled with $SF_6$ gas can be used as a 500 kV device when it is filled with the abovementioned mixed gas.

Voltages of most substation facilities in Japan are 500—275 kV and 275—154 kV. Accordingly, the rated voltages can be advantageously increased merely by exchanging the gas in the existing facilities.

The results of the measurement of the relationship between the ratio of $SF_6$ to $C_2F_5CN$ in a gas mixture and the breakdown voltage at 20°C are shown in Figure 5 using the electrode system shown in Figure 2b. From the results shown in Figure 5, it is seen that the relationship is expressed by an upwardly convex curve. Namely, it is seen that the breakdown voltage is increased beyond the theoretical value by the synergistic effects of the components of the gas mixture. This is advantageous from the standpoint of the design of a device.

A model simulating an actual device corresponding to a 154 kV-class device was filled with a gas comprising 24% of $C_2F_5CN$ and 76% of $SF_6$ under absolute pressure of 1.5 (152 kPa) and when the breakdown voltage was examined, it was seen that the ratio of the AC breakdown voltage of the gas mixture to that of $SF_6$ was 1.3, which is equal to the theoretical value obtained according to the above-mentioned formula.

The description has been made with reference to a one-component or two-component gas system. However, similar effects can be attained with a gas system comprising three or more components. Since it may be considered that the lower limit temperature is about 20°C in a high-temperature region, pressures lower than the vapor pressure at 20°C, shown in Table 2, are effective as the partial pressure of the one-component gas or gas mixture.

Furthermore, when $CF_3CN$ is used, attainment of an effect similar to the effect attained by $C_2F_5CN$ can be expected.

According to the present invention, by using a gas mixture of $C_2F_5CN$ and $SF_6$ for insulation, a synergistic effect is attained and the dielectric strength can be increased and therefore, the size of the device can be decreased.

## Claims

1. A gas-insulated electric device comprising an electric conductor (3) disposed in a sealed vessel (1) filled with an insulating gas (2), said conductor (3) being supported by a solid insulating member (4) wherein the insulating gas is a mixture of $C_2F_5CN$ and $SF_6$, the $C_2F_5CN$ content being in the range of 10 to 77 mol%.

2. The gas-insulated electric device according to Claim 1, wherein the $C_2F_5CN$ content is in the range of 24 to 77 mol%.

3. The gas-insulated electric device according to Claim 1 or 2, wherein the absolute pressure of the mixture is at least 152 kPa.

## Patentansprüche

1. Gas-isolierte elektrische Vorrichtung mit einem elektrischen Leiter (3), der in einem mit einem Isoliergas (2) gefüllten abgedichteten Behälter (1) angeordnet ist und von einem festen Isolierglied (4) gehalten wird, wobei das Isoliergas eine Mischung aus $C_2F_5CN$ und $SF_6$ ist und der Gehalt an $C_2F_5CN$ im Bereich von 10 bis 77 Mol-% beträgt.

2. Gas-isolierte elektrische Vorrichtung nach Anspruch 1, wobei der Gehalt an $C_2F_5CN$ im Bereich von 24 bis 77 Mol-% beträgt.

3. Gas-isolierte elektrische Vorrichtung nach Anspruch 1 oder 2, wobei der Absolutdruck der Mischung mindestens 152 kPa beträgt.

## Revendications

1. Dispositif électrique à isolation par gaz, comprenant un conducteur électrique (3) disposé dans un récipient étanche (1) rempli d'un gaz isolant (2), ledit conducteur (3) étant supporté par un membre isolant (4) solide, dans lequel le gaz isolant est un mélange de $C_2F_5CN$ et $SF_6$, la teneur en $C_2F_5CN$ étant dans le domaine de 10 à 77% molaire.

2. Dispositif électrique à isolation par gaz selon la revendication 1, dans lequel la teneur en $C_2F_5CN$ est dans le domaine de 24 à 77% molaire.

3. Dispositif électrique à isolation par gaz selon la revendication 1 ou la revendication 2, dans lequel la pression absolue du mélange est d'au moins 152 kPa.

FIG. 1

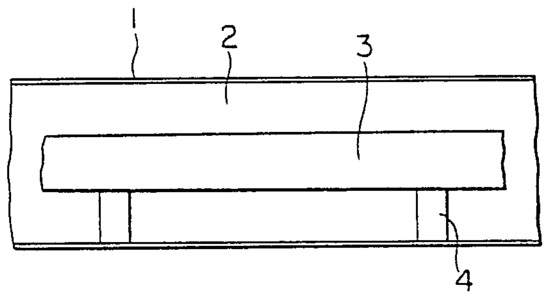


FIG. 2a

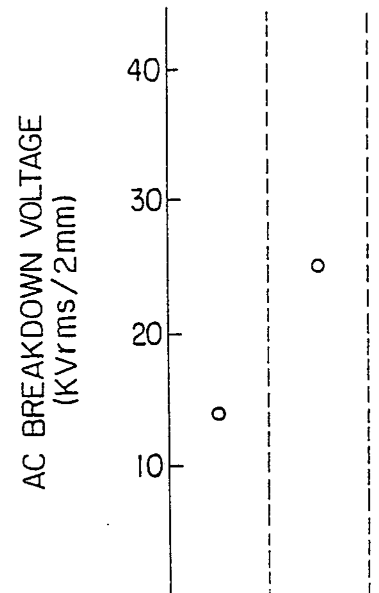


| | | |
|---|---|---|
| BREAKDOWN VOLTAGE RELATIVE TO SF6 | 1.0 | 1.8 |
| GAS | SF6 | C2F5CN |

FIG. 2b

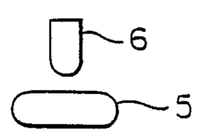

FIG. 3

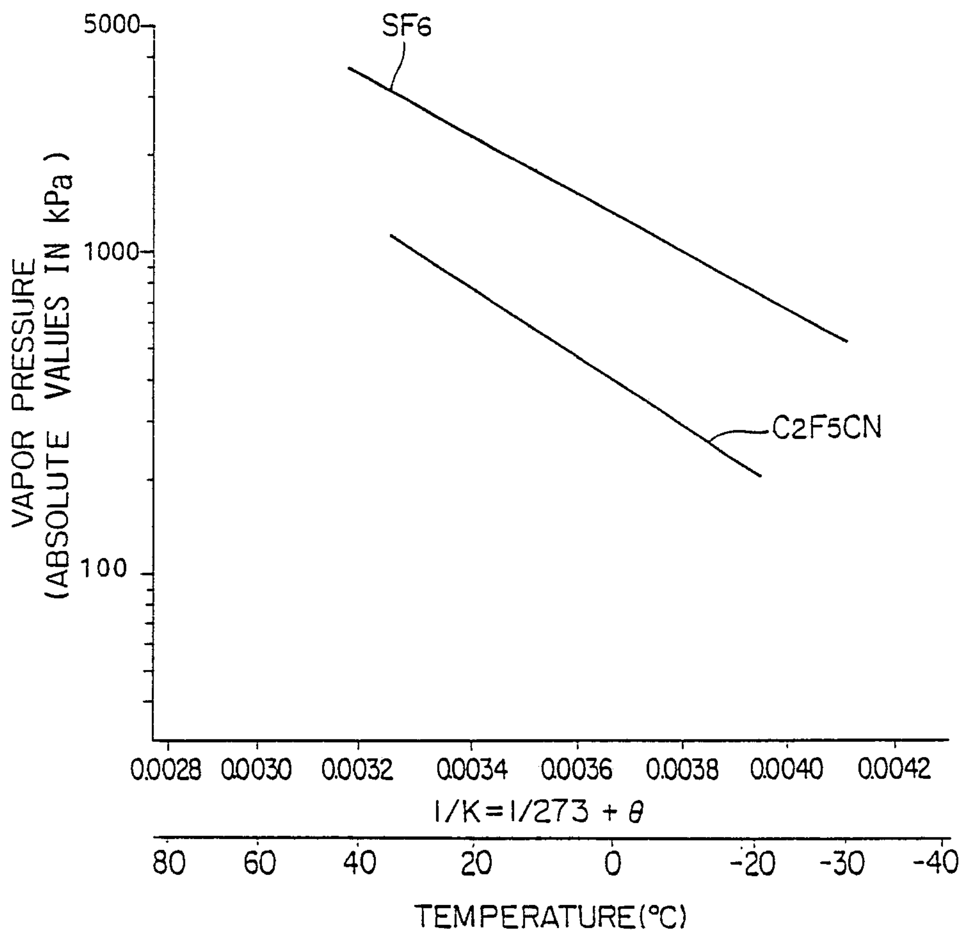

5000
1000
100
VAPOR PRESSURE
(ABSOLUTE VALUES IN kPa)
SF6
C2F5CN
0.0028 0.0030 0.0032 0.0034 0.0036 0.0038 0.0040 0.0042
1/K=1/273 + θ
80 60 40 20 0 -20 -30 -40
TEMPERATURE(°C)

FIG. 4

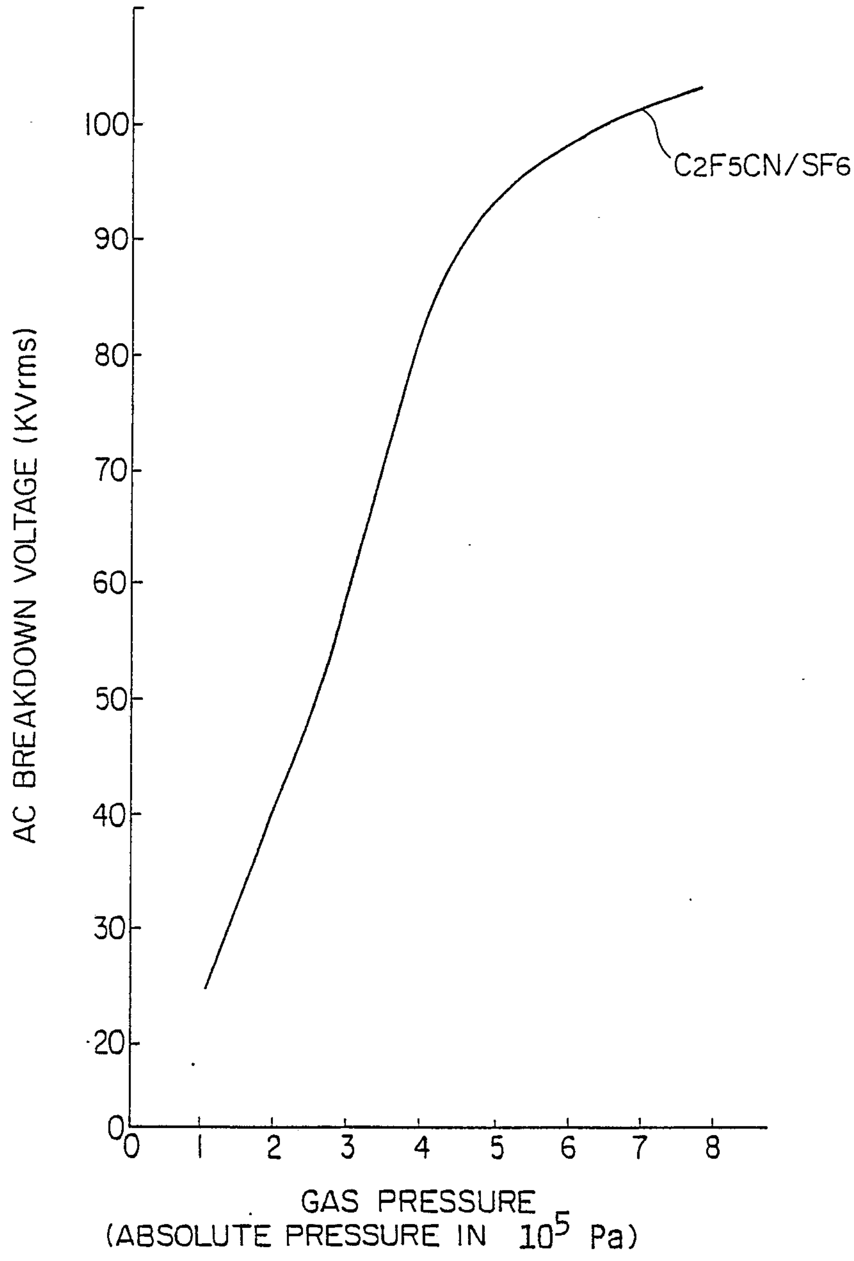
AC BREAKDOWN VOLTAGE (KVrms)
100
90
80
70
60
50
40
30
20
0
0
1
2
3
4
5
6
7
8
C2F5CN/SF6
GAS PRESSURE
(ABSOLUTE PRESSURE IN 10^5 Pa)

FIG. 5

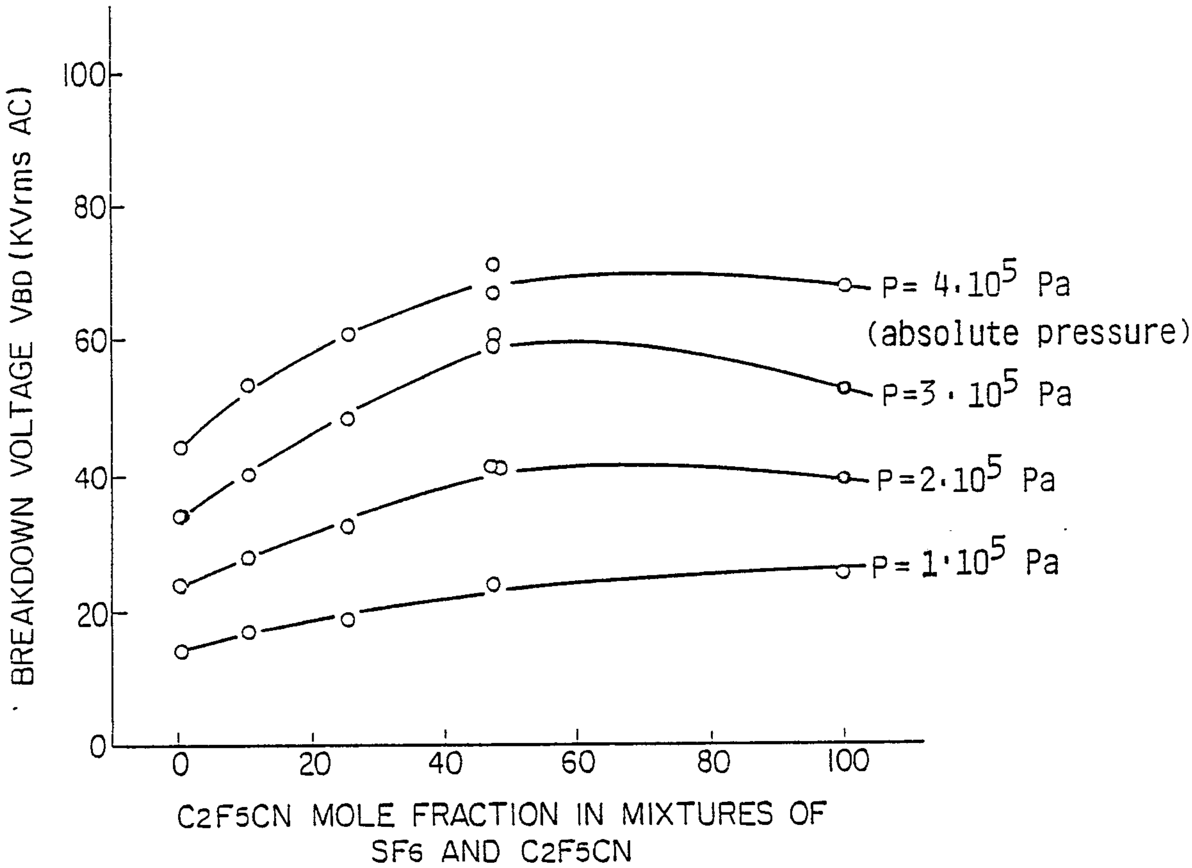
BREAKDOWN VOLTAGE VBD (KVrms AC)
100
80
60
40
20
0
0
20
40
60
80
100
P= 4.10^5 Pa
(absolute pressure)
P=3 · 10^5 Pa
P=2·10^5 Pa
P= 1·10^5 Pa
C2F5CN MOLE FRACTION IN MIXTURES OF SF6 AND C2F5CN